Europäisches Patentamt

European Patent Office

Office européen des brevets

(19)

(11) Veröffentlichungsnummer: **0 268 720 B1**

(12) **EUROPÄISCHE PATENTSCHRIFT**

(45) Veröffentlichungstag der Patentschrift:
23.01.91 Patentblatt 91/04

(51) Int. Cl.⁵: **E04G 1/15**, B29C 51/36,
B29C 67/14

(21) Anmeldenummer: 86810534.7

(22) Anmeldetag: 24.11.86

(54) **Gerüstplatte aus Kunststoff, Verfahren zu ihrer Herstellung und Vorrichtung zur Ausführung des Verfahrens.**

(43) Veröffentlichungstag der Anmeldung:
01.06.88 Patentblatt 88/22

(45) Bekanntmachung des Hinweises auf die
Patenterteilung:
23.01.91 Patentblatt 91/04

(84) Benannte Vertragsstaaten:
AT BE CH DE ES FR GB IT LI LU NL SE

(56) Entgegenhaltungen:
DE-A- 1 559 034
DE-A- 1 759 177
DE-A- 3 419 494
FR-A- 2 340 187
FR-A- 2 457 946
GB-A- 2 058 188
GB-A- 2 167 340

(73) Patentinhaber: POLYTEX PLASTIC SA
Gibelstrasse 41
CH-2540 Grenchen (CH)

(72) Erfinder: Müller, Bruno
Gibelstrasse 39
CH-2540 Grenchen (CH)

(74) Vertreter: Seehof, Michel et al
c/o AMMANN PATENTANWAELTE AG BERN
Schwarztorstrasse 31
CH-3001 Bern (CH)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung bezieht sich auf eine Gerüstplatte aus faserverstärktem Kunststoff, mit einem mindestens Längswände aufweisenden Oberteil, das mit einem verstärkenden, im Querschnitt etwa wellenförmigen Teil verklebt ist. Eine Arbeitsbühne mit obigen Merkmalen ist aus der DE-A-1 559 034 bekannt. Diese Arbeitsbühne weist mindestens Längsränder auf, wobei offen bleibt, ob auch Querränder vorhanden sind, um ein kastenförmiges Teil zu bilden. Das sinuswellenförmige verstärkende Teil bewirkt, dass die Kämme, auf denen das Oberteil ruht, nur eine relativ schmale Linie bilden, die durch Druck verbreitert werden muss. Ausserdem weist dieses Teil keine Seitenränder auf. Möglicherweise genügt diese Arbeitsbühne aus Kunststoff den Stabilitätsanforderungen hierfür, jedoch nicht denjenigen, die an wesentlich längeren und schmäleren Gerüstplatten gestellt werden, wobei insbesondere die Verwindungssteifheit eine Rolle spielt.

Gerüstplatten aus Kunststoff sind, wenn überhaupt, nur sehr selten auf dem Markt anzutreffen, obwohl sie grosse Vorteile aufweisen könnten, wie beispielsweise ein wesentlich kleineres Gewicht und grösserer Widerstand gegenüber Wettereinflüssen.

Es ist demgegenüber eine erste Aufgabe der vorliegenden Erfindung eine Gerüstplatte aus Kunststoff anzugeben, die den Stabilitätsanforderungen und darauf gerichteten Vorschriften genügt.

In der Technischen Rundschau Nr. 44-86 vom 31.10.1986, S. 23ff., ist eine grosse Anzahl von Verbundwerkstoffen beschrieben, die vielfältig angewendet werden können. Für eine gewisse Anzahl von Fällen sind lichthärtende Einkomponentsysteme anwendbar, die als vor imprägnierte Halbzeuge angeboten werden. In dem genannten Artikel, der den Stand der Technik zusammenfasst, wird dieses Halbzeug verwendet, um kompliziert geformte Wickelteile herzustellen.

Aus der FR-A-2 340 187 ist ferner ein Verfahren zum Formen eines Kunststoffilmes auf ein Modell mit tiefen Ausnehmungen bekannt, worin der Film vorgewärmt und mit Ueberdruck vorgeformt wird, um anschliessend auf der mit Oeffnungen versehenen Form bei Unterdruck tiefgezogen zu werden.

Es ist von diesem Stand der Technik ausgehend eine weitere Aufgabe der Erfindung ein Verfahren anzugeben, mit welchem es möglich ist, aus einem lichthärtenden duroplastischen Verbundwerkstoff schnell und genau die oben erwähnten Gerüstplatten herzustellen, und eine weitere Aufgabe, eine dazu geeignete, gegenüber dem Stand der Technik verbesserte Vorrichtung anzugeben.

Diese Aufgaben werden mit der Gerüstplatte, mit dem Verfahren und der Vorrichtung gelöst, die in den Patentansprüchen beschrieben sind.

Die Erfindung wird im folgenden anhand von Ausführungsbeispielen von Gerüstplatten der verschiedenen Verfahrensstufen zur Herstellung einer Gerüstplatte und einer Vorrichtung naher erläutert.

Fig. 1 zeigt die erfindungsgemässe Vorrichtung von oben,

Fig. 2 zeigt einen Längsschnitt von Fig. 1,

Fig. 3 zeigt im grösseren Massstab einen Querschnitt der Fig. 1,

Fig. 4 zeigt eine Ausführungsvariante zu Fig. 3,

Fig. 5 zeigt eine Ausschnittsvergrösserung von Fig. 2,

Fig. 6 zeigt schematisch und in vergrössertem Massstab den Aufbau der Vorrichtung gemäss Fig. 1,

die Fig. 7 - 12 zeigen sechs Verfahrensschritte zur Herstellung einer Gerüstplatte,

Fig. 13 zeigt eine erfindungsgemässe Gerüstplatte von oben,

Fig. 14 zeigt einen Schnitt gemäss der Linie XIV-XIV von Fig. 13,

Fig. 15 zeigt einen teilweisen Längsschnitt aus dem ersten Ausführungsbeispiel gemäss Fig. 13,

Fig. 16 zeigt eine Ausführungsvariante zu Fig. 15,

Fig. 17 zeigt die Ausführungsvariante im teilweisen Querschnitt analog zu Fig. 14, und

Fig. 18 zeigt im vergrösserten Massstab eine abgedichtete Kante der Gerüstplatte.

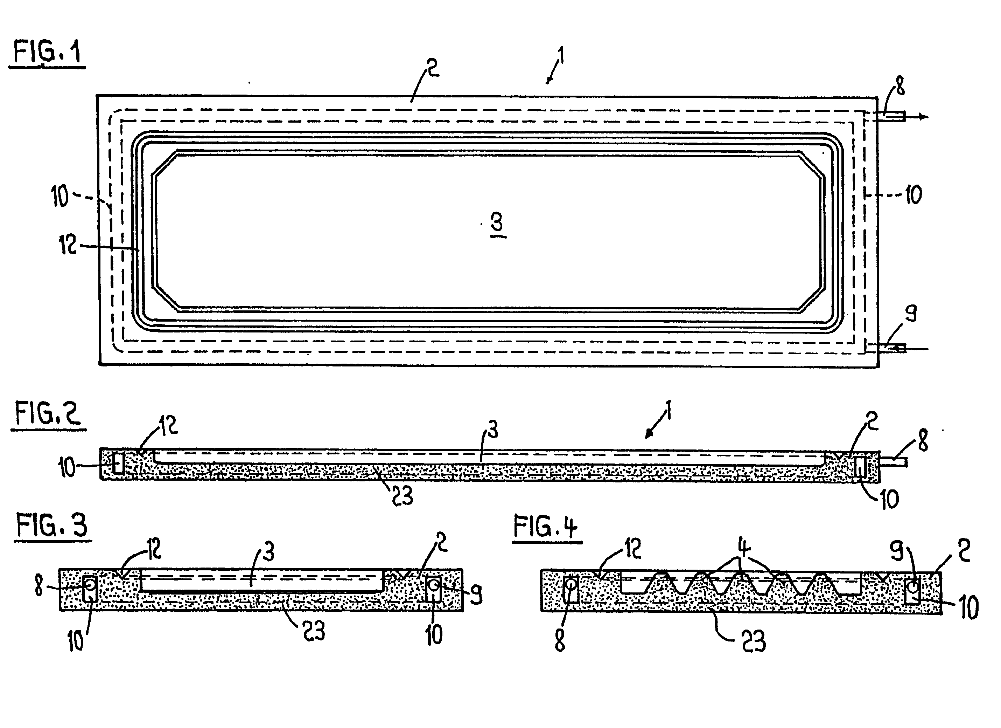

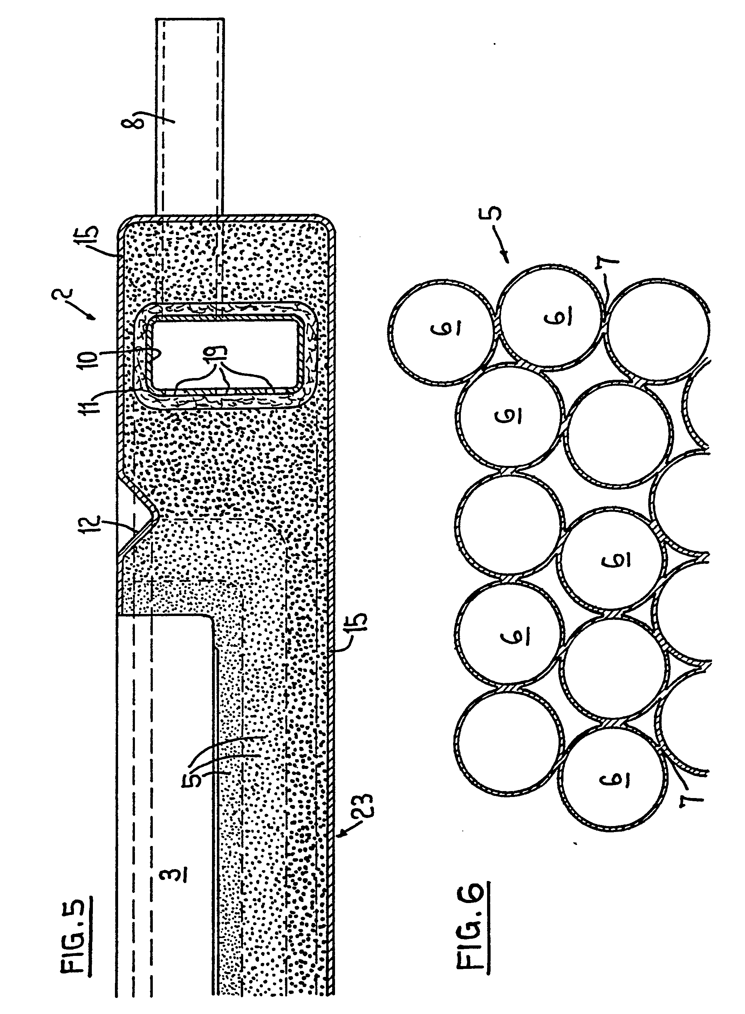

In den Fig. 1 - 6 ist der Aufbau eines Formunterteils 1 dargestellt, das aus einem Rand 2 und einem Innenraum 3 besteht. Der Boden 23 des Innenraums kann wie in Fig. 3 eben sein oder gemäss Fig. 4 Längsrippen 4 oder eine Riffelung 24 aufweisen. Wie in den Schnitten und insbesondere in Fig. 6 angedeutet, besteht das Formunterteil 1 aus einem porösen Material 5. Dieses poröse Material kann beispielsweise aus einer Aluminiumgranulat-Harzmischung bestehen, wobei die Aluminiumgranulatkügelchen 6 einen Durchmesser von beispielsweise 0,5 bis 4mm aufweisen können. Dabei hat es sich als vorteilhaft erwiesen, Körner verschiedener Grösse zu verwenden und innen, in der Nähe des zu formenden Teils, feinere Körner anzuordnen als aussen, wie dies in Fig. 5 schematisch durch drei Schichten angedeutet ist. Zur Herstellung des Formunterteils werden in einer anderen Form ein Gemisch aus Aluminiumgranulat 6 und Harz 7, etwa in einem Verhältnis von 1,5 - 1 zu 0,2 in Abhängigkeit vom Durchmesser des Aluminiumgranulats, eingegeben und erwärmt, bis die Harzschicht zu schmelzen beginnt und das Aluminiumgranulat miteinander verbindet, derart, dass wie in Fig. 6 angedeutet, Lücken entstehen, um die gewünschte Luftdurchlässigkeit zu erzielen. Anstatt Aluminiumgranulat können selbstverständlich auch andere Körner verwendet werden oder für Spezialfälle auch luftdurchlässiges, natürliches Gestein.

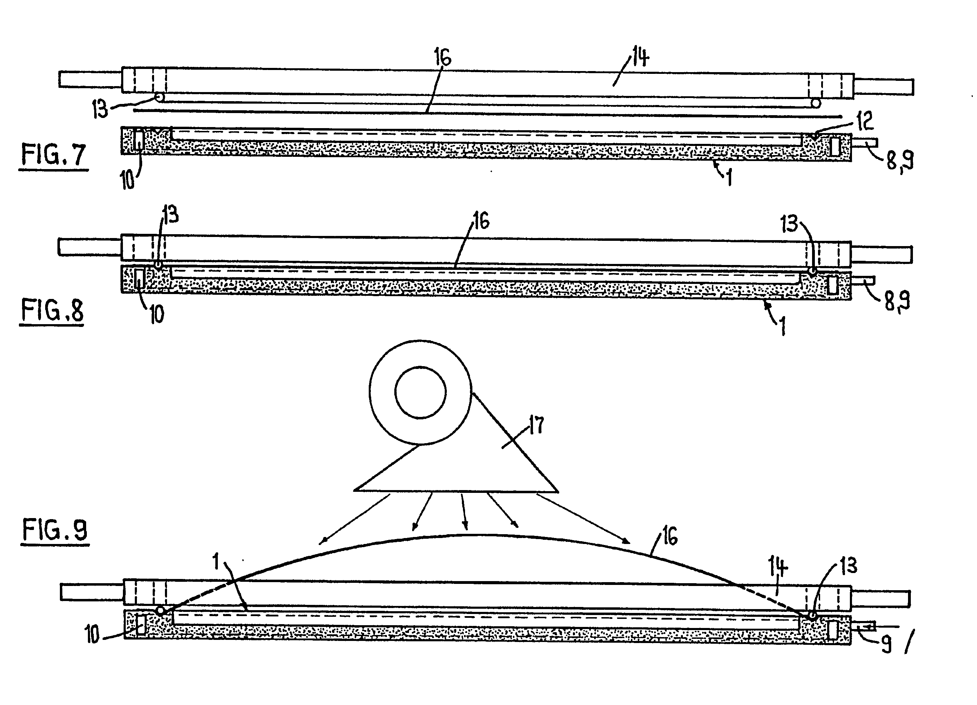

Das Formunterteil enthält 2 Anschlüsse, einen Anschluss für Vakuum 8 sowie einen Anschluss für Druckluft 9, s. Fig. 1. Beide Anschlüsse gelangen in eine ringförmige Leitung 10, die aus einem Metallrohr mit nach dem Innenraum gerichteten Oeffnungen 19 besteht, welches zweckmässigerweise mit einer luftdurchlässigen Glasfasermatte 11 isoliert ist. An der Oberseite befindet sich eine umlaufende, beispielsweise V-förmige Nut 12, in die ein umlaufender Pressring 13 am rahmenförmigen Formoberteil 14 greift, s. Fig. 7. Das Formunterteil 1 ist mit einer luftdichten Hülle 15 ummantelt, die das gesamte Formunterteil mit Ausnahme des Innenteils 3 umfasst.

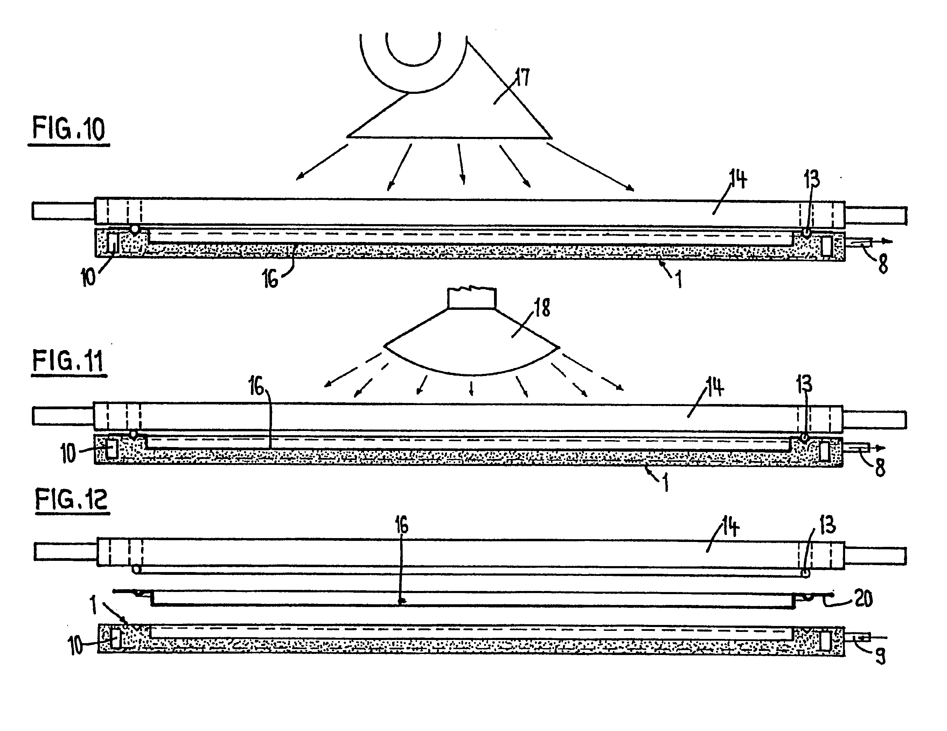

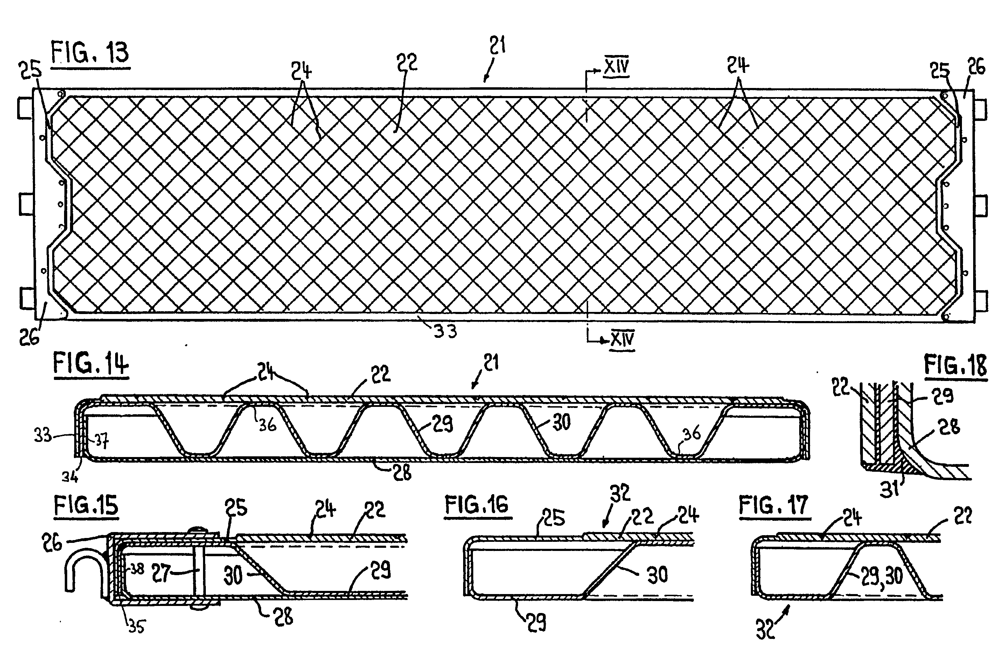

Die Verwendung der Form wird im folgenden anhand der Herstellung einer Gerüstplatte gemäss den Fig. 7 - 12 und 13 - 18 erläutert. Als Material wird im vorliegenden Fall ein lichthärtendes, vorimprägniertes Halbzeug, ein Prepreg mit einem Glasfaserroving, verwendet. Die Materialbahn 16 wird auf das Formunterteil 1 gelegt und das Formoberteil 14 wird geschlossen, um die Bahn durch den Pressring zu spannen. Daraufhin wird durch den Einlass 9 Druckluft beaufschlagt, so dass sich das Bahnteil wölbt. Gleichzeitig wird das herausgewölbte Bahnteil mit einer Heizquelle 17, die ein Heissluftgebläse sein kann, erwärmt, wobei Sorge getragen wird, dass die Temperatur in vorliegendem Fall 80°C nicht übersteigt. Dabei tritt eine Streckung um etwa 60% ein. Anschliessend wird, s. Fig. 10, die Vakuumquelle an den Anschluss 8 geschaltet und das erwärmte und gestreckte Material durch das Vakuum tiefgezogen. Da es sich um lichthärtendes Material handelt, wird daraufhin eine UV-Lichtquelle 18 angeschaltet und das geformte Stück dabei gehärtet, wobei in vorliegendem Fall und abhängig vom Material, die Härtezeit 40s dauert. Anschliessend wird gemäss Fig. 12 der Rahmen 14 entfernt und das geformte Stück unter Druckluftbeaufschlagung aus der Form entnommen.

Die Gerüstplatte 21 besteht entweder gemäss den Figuren 14 und 15 aus drei oder gemäss den Figuren 16 und 17 aus zwei kastenförmigen zusammengeklebten Teilen, die in der Form gemäss den Figuren 1 bis 6 mit den Innenräumen 3 und 4 geformt werden. Für beide Ausführungsvarianten wird das gleiche Oberteil 22 mit dem Innenraum 3 angefertigt, wobei der Boden 23 der Form die dem Oberteil entsprechende Riffelung 24 aufweist. Die Querseiten des Oberteils weisen je einen Rand 25 auf, der der Aufnahme der Beschläge 26 dient, die durch Schraubenbolzen 27 gesichert sind. Die Längsseiten des Oberteils weisen ebenfalls Seitenflächen 33 auf. Nach dem Herausnehmen des geformten und gehärteten Stücks aus der Form werden die Ränder 20, an denen es aufgespannt und gehalten war, abgetrennt.

Das Unterteil 28 der Platte 21 wird in einem ähnlichen Formunterteil hergestellt wie das Oberteil, wobei jedoch die Oberfläche nicht geriffelt zu sein braucht. Das Unterteil 28 weist sowohl Längs- als auch Querseitenflächen 37, bzw. 38 auf. Das verstärkende Zwischenteil 29 ist mit dem Formboden 4 hergestellt und mit wellenförmigen Längsrippen 30 versehen, die eben ausgebildet und gegenüber der Längsachse geneigt sind und mit ebenen, parallel zum Ober-. bzw. Unterteil verlaufenden abgeflachten Übergangs abschnitten 36 versehen sind. Auch das verstärkende Teil 29 ist mit Längs- und Querseitenflächen 34, bzw. 35 versehen. Nach dem Abschneiden der Ränder 20 an allen drei Teilen werden diese Teile nach bekannten Verfahren miteinander verklebt, um die Gerüstplatte 21 zu ergeben. Aus der Figur 14 geht hervor, dass die Seitenflächen des Ober und des Zwischenteils gleichgerichtet sind, während die Seitenflächen des Bodenteils entgegengesetzt gerichtet sind, um einen geschlossenen Kasten zu ergeben.

In der Ausführungsvariante gemäss den Figuren 16 und 17 besteht die Gerüstplatte 32 nur noch aus zwei Teilen, dem Oberteil 22 mit der Riffelung 24 und dem verstärkenden Teil 29 mit den Längsrippen 30. Das Teil 29 mit den Längsrippen 30 ist jedoch in dieser Ausführungsvariante umgekehrt, d.h. mit nach oben weisenden Seitenflächen mit dem Oberteil verbunden, so dass sich nach aussen, bzw. unten, eine gerippte Oberfläche ergibt.

Um einen vollständigen Schutz gegen Feuchtigkeit zu erzielen, werden die Kanten zusätzlich mit einer geeigneten Masse 31 verklebt und abgedichtet, siehe Fig. 18. Anschliessend wird die Gerüstplatte mit den Beschlägen versehen, wobei jede Art Beschläge verwendet werden kann, gegebenenfalls unter Anpassung der Gerüstplattenteile. Gerüstplatten aus Verbundwerkstoff mit Glasfasern, die die erforderliche Stabilität und Bruchfestigkeit sowie die gleichen Abmessungen von ca. 2'500 x 600 x 50 mm wie herkömmliche Holzplatten aufweisen, weisen ein Gewicht von 14 kg gegenüber einem solchen von 28 -30 kg bei herkömmlichen Platten auf. Eine solche Gewichtsersparnis ist nicht nur für die Personen, die ein Gerüst aufbauen müssen von enormem Vorteil, sondern senkt auch die Frachtrate, besonders bei Grossbauten um die Hälfte. Ausserdem ist hervorzuheben, dass die Beständigkeit gegenüber Witterungseinflüssen grösser ist als beim Holz.

Anstatt der gezeigten Riffelung kann die Oberfläche der Gerüstplatte jede andere geeignete Gestalt aufweisen und es ist auch möglich, die Oberfläche aufzurauhen oder mit einem rutschfesten Belag zu versehen.

## Ansprüche

1. Gerüstplatte (21) aus faserverstärktem Kunststoff, mit einem mindestens Längswände aufweisenden Oberteil (22), das mit einem verstärkenden, im Querschnitt etwa wellenförmigen Teil (29) verklebt ist, dadurch gekennzeichnet, dass sowohl das Oberteil (22) als auch das verstärkende Teil (29) je kastenförmig ausgebildet sind und vier Seitenwände (25, 33, 34, 35) aufweisen und aus einem lichthärtenden duroplastischen Verbundwerkstoff tiefgezogen sind, und dass das wellenförmige verstärkende Teil (29) ebene, zur Längsachse geneigte Längsrippen (30) aufweist, die oben und unten mit abgeflachten Uebergangsabschnitten (36) versehen sind.

2. Gerüstplatte nach Anspruch 1, dadurch gekennzeichnet, dass das verstärkende Teil (29) als Unterteil dient, wobei seine Seitenränder (34, 35) entgegengerichtet zu denjenigen (25, 33) des Oberteils (22) sind.

3. Gerüstplatte nach Anspruch 1, dadurch gekennzeichnet, dass das verstärkende Teil (29) als Zwischenteil dient und die Gerüstplatte (21) mit einem unteren, kastenförmigen Abschluss (28) versehen ist, wobei die Seitenränder (25, 33, 35, 34) des Ober- und des Zwischenteils gleichgerichtet und diejenigen (37, 38) des Abschlusses dazu entgegengerichtet angeordnet sind und alle drei Teile miteinander verklebt sind.

4. Gerüstplatte nach einem der Ansprüche 1 bis 3, dadurch gekennzeichnet, dass die Oberfläche der Platte mit Mitteln (24) zur Erhöhung der Rutschfestigkeit ausgebildet ist.

5. Gerüstplatte nach einem der Ansprüche 1 bis 4, dadurch gekennzeichnet, dass die Kanten der Platte mit einer Masse (31) abgedichtet sind.

6. Verfahren zur Herstellung einer Gerüstplatte (21) aus einem lichthärtenden, duroplastischen Verbundwerkstoff nach Anspruch 1 oder 3, dadurch gekennzeichnet, dass eine Kunststoffbahn (16) auf ein aus einem luftdurchlässigen Material (5) bestehendes, mit verschiedenen Innenräumen (3, 4) zur Formung der verschiedenen Teile (22, 29, 28) der Gerüstplatte versehenes Formunterteil (1) gespannt wird und das Formunterteil mit Druckluft beaufschlagt und der herausgewölbte Teil der Bahn gleichzeitig erwärmt und gedehnt wird und anschliessend das Formunterteil mit Vakuum beaufschlagt wird, um die Bahn (16) anzusaugen und tiefzuziehen, woraufhin das geformte Gerüstplattenteil (22, 28, 29) durch Bestrahlen mit einer UV-Lichtquelle (18) gehärtet und nach Abnehmen des rahmenförmigen Formoberteils (14) mittels Druckluft abgehoben wird, anschliessend die Ränder (20) der geformten Teile abgetrennt und die Teile miteinander verklebt werden.

7. Verfahren nach Anspruch 6, dadurch gekennzeichnet, dass die Kanten der Gerüstplatte abgedichtet werden und die Gerüstplatte anschliessend mit Beschlägen versehen wird.

8. Vorrichtung zum Ausführen des Verfahrens nach Anspruch 6, dadurch gekennzeichnet, dass sie ein Formunterteil (1) mit verschiedenen Innenräumen (3, 4) zur Formung der verschiedenen Gerüstplattenteile (22, 28, 29) aus einem porösen Material (5 ; 6, 7) aufweist, das mit einem Druckluft- und Vakuumanschluss (8, 9) versehen ist, wobei die Anschlüsse in eine ringförmige, luftdurchlässige Leitung (10) münden und das Formunterteil, mit Ausnahme des Innenraums (3, 4), mit einer luftundurchlässigen Hülle (15) umgeben ist, und die Vorrichtung ferner eine Wärmequelle (17) sowie eine UV-Lichtquelle (18) aufweist.

9. Vorrichtung nach Anspruch 8, dadurch gekennzeichnet, dass das luftdurchlässige Material aus durch Harz (7) zusammengehaltenem Aluminiumgranulat (6) besteht.

10. Vorrichtung nach Anspruch 9, dadurch gekennzeichnet, dass das Granulat Körner mit einem Durchmesser von 0,54 mm aufweist und dass, beginnend beim Forminnenraum (3), Körner mit steigendem Durchmesser angeordnet sind.

11. Vorrichtung nach einem der Ansprüche 8 bis 10, dadurch gekennzeichnet, dass die Oberseite des Formunterteils eine umlaufende Nut (12) aufweist, in die ein Pressring (13) im rahmenförmigen Formoberteil (14) passt.

## Claims

1. A scaffolding board (21) formed from fibre-reinforced plastics material, having an upper portion (22) which is provided at least with longitudinal walls and cemented to a reinforcing portion (29) whose cross-section is approximately wave-shaped, characterized in that both the upper portion (22) and the reinforcing portion (29) each have a box-shaped configuration, are provided with four side walls (25, 33, 34, 35), and are deep-drawn from a light-hardenable, duroplastic composite material, and in that the wave-shaped reinforcing portion (29) is provided with level longitudinal ribs (30) which are inclined with respect to the longitudinal axis and comprise flattened transitional portions (36) at the top and at the bottom.

2. A scaffolding board according to claim 1, characterized in that the reinforcing portion (29) serves as the lower portion, its lateral edges (34, 35) extending in the opposite direction to that of the lateral edges (25, 33) of the upper portion (22).

3. A scaffolding board according to claim 1, characterized in that the reinforcing portion (29) serves as an intermediate portion and that the scaffolding board (21) is provided with a lower, box-shaped closure (28), the lateral edges (25, 33, 35, 34) of the upper and intermediate portions extending in the same direction and those (37, 38) of the edge trim extending in the opposite direction thereto, and all three portions being cemented together.

4. A scaffolding board according to any one of claims 1 to 3, characterized in that the surface of the board is provided with means (24) for increasing the resistance to slipping.

5. A scaffolding board according to any one of claims 1 to 4, characterized in that the edges of the board are sealed by means of a composition of matter (31).

6. A method for producing a scaffolding board (21) according to claim 1 or 3 from a light-hardenable, duroplastic composite material, characterized in that a web of plastics material (16) is clamped onto a lower mould portion (1) which is formed from an air-permeable material (5) and provided with different cavities (3, 4) for moulding the different portions (22, 29, 28) of the scaffolding board, compressed air is applied to the lower mould portion, the arched portion of the web is simultaneously heated and expanded, and subsequently a vacuum is applied to the lower mould portion in order to aspirate and deep-draw the web (16), whereupon the shaped scaffolding board portion (22, 28, 29) is hardened by irradiation from a source of ultra-violet light (18) and is lifted out by means of compressed air after the frame-like upper mould portion (14) has been removed, and the edges (20) of the moulded parts are cut off and the parts are cemented together.

7. A method according to claim 6, characterized in that the edges of the scaffolding board are sealed, and the scaffolding board is subsequently provided with fittings.

8. A device for implementing the method according to claim 6, characterized in that it comprises a lower mould portion (1) having different cavities (3, 4) for moulding the different portions (22, 28, 29) of the scaffolding board and which is formed from a porous material (5 ; 6, 7) and provided with a compressed-air and vacuum inlet (8, 9), the inlets communicating with an annular, air-permeable conduit (10), and the lower mould portion, with the exception of the mould interior (3,4), is surrounded by a casing (15) which is impermeable to air, the device further comprising a heat source (17) and an ultraviolet light source (18).

9. A device according to claim 8, characterized in that the air-permeable material is formed from aluminium granulate (6) which is held together by means of a resin (7).

10. A device according to claim 9, characterized in that the the granulated material comprises granules from 0.5 mm to 4 mm in diameter and, starting from the mould interior (3), granules with increasing diameters are provided.

11. A device according to claims 8 to 10, characterized in that the upper surface of the lower mould portion is provided with a circumferential groove (12), a pressring (13) in the frame-shaped upper mould portion (14) fitting into groove (12).

## Revendications

1. Planche d'échafaudage (21) de matière synthétique renforcée par fibres, comportant une partie supérieure (22) présentant au moins des parois longitudinales, qui est collée à une partie renforçante (29) de forme approximativement ondulée, caractérisée en ce que la partie supérieure (22) et la partie renforçante (29) sont toutes les deux conformées en caisson et présentent chacune quatre parois latérales (25, 33, 34, 35) et sont embouties à partir d'une matière composite duroplastique durcissable à la lumière, et que la partie renforçante (29) ondulée présente des nervures longitudinales (30) planes inclinées par rapport à l'axe longitudinal et pourvues de sections de transition aplaties (36) par le haut et par le bas.

2. Planche d'échafaudage selon la revendication 1, caractérisée en ce que la partie renforçante (29) sert de partie inférieure, ses bords latéraux (34, 35) s'étendant dans la direction opposée à celle de bords latéraux (25, 33) de la partie supérieure (22).

3. Planche d'échafaudage selon la revendication 1, caractérisée en ce que la partie renforçante (29) sert de partie intermédiaire, et que la planche d'échafaudage (21) est munie d'une clôture inférieure (28) en forme de caisson, les bords latéraux (25, 33, 25, 34) des parties supérieure et intermédiaire s'étendant dans la même direction, et ceux (37, 38) de la clôture étant disposés dans la direction opposée, et toutes les trois parties étant collées ensemble.

4. Planche d'échafaudage selon l'une des revendications 1 à 3, caractérisée en ce que la surface de la planche est conformée de façon à présenter des moyens (24) antidérapants.

5. Planche d'échafaudage selon l'une des revendications 1 à 4, caractérisée en ce que les bords de la planche sont rendues étanches au moyen d'une composition de matière (31).

6. Procédé de fabrication d'une planche d'échafaudage (21) à partir d'une matière composite duroplastique durcissable à la lumière selon la revendication 1 ou 3, caractérisé en ce qu'une bande (16) de matière synthétique est tendue sur la partie inférieure (1) d'un moule formée d'un matériau (5) perméable à l'air et pourvu de différentes cavités (3, 4) pour former les différentes parties (22, 29, 28) de la planche d'échafaudage, que de l'air comprimé est appliqué à la partie inférieure du moule et la partie de la bande faisant saillie est simultanément chauffée et étirée, et la partie inférieure du moule est ensuite mise sous vide afin d'aspirer et d'emboutir la bande (16), après quoi la pièce moulée (22, 28, 29) en planche d'échafaudage est durcie au moyen d'une source de lumière ultraviolette (18) et détachée à l'aide d'air comprimé après enlèvement de la partie supérieure (14) du moule en forme de cadre, les bords (20) des pièces moulées étant ensuite découpés et les parties étant collées ensemble.

7. Procédé selon la revendication 6, caractérisé en ce que les arêtes de la planche d'échafaudage sont colmatées, et que la planche d'échafaudage est ensuite munie d'armatures.

8. Dispositif pour la mise en oeuvre du procédé selon la revendication 6, caractérisé en ce qu'il comporte une partie inférieure (1) d'un moule, consistant en un matériau poreux (5 ; 6, 7) et présentant différentes cavités (3, 4) pour former les différentes parties (22, 28, 29) de la planche d'échafaudage ainsi qu'un raccordement d'air comprimé et de vide (8, 9), lesdits raccordements communiquant avec une conduite (10) annulaire et perméable à l'air, la partie inférieure du moule à l'exception de son intérieur (3, 4) étant entourée d'une enveloppe (15) imperméable à l'air, et que le dispositif comporte en plus une source de chaleur (17) ainsi qu'une source de lumière ultraviolette (18).

9. Dispositif selon la revendication 8, caractérisé en ce que le matériau perméable à l'air consiste en un granulé d'aluminium (6) lié par une résine (7).

10. Dispositif selon la revendication 9, caractérisé en ce que le granulé présente des granules d'un diamètre de 0,5 à 4 mm, et qu'à partir de l'intérieur (3) du moule, des granules à diamètre croissant sont disposés.

11. Dispositif selon l'une des revendications 8 à 10, caractérisé en ce que la surface supérieure de la partie inférieure du moule présente une rainure (12) continue adaptée à recevoir un anneau de serrage (13) dans la partie supérieure (14) du moule sous forme de cadre.

EP 0 268 720 B1

FIG.1

FIG.2

FIG.3

FIG.4

FIG.5

FIG.6

EP 0 268 720 B1

FIG.7

FIG.8

FIG.9

FIG.10

FIG.11

FIG.12

FIG. 13

25 · 24 22 21 XIV 24 25 26

33 XIV

26

FIG. 14

24 22 21 FIG. 18

33 37 36 29 30 36 22 29

34 28 28

31

FIG. 15 25 24 22 FIG. 16 32 22 24 FIG. 17 24 22

26 25

38 27 30 29 29 30 29,30

35 28 29 32

EP 0 268 720 B1